# EUROPÄISCHE PATENTSCHRIFT

(11) **EP 1 841 813 B1**
(45) Veröffentlichungstag und Bekanntmachung des Hinweises auf die Patenterteilung: **13.08.2008**
(21) Anmeldenummer: 05815599.5
(22) Anmeldetag: 25.11.2005
(51) Int. Cl.: C08J 5/00, C08K 13/04

(54) **POLYMERE NANO-KOMPOSITWERKSTOFFE DURCH KONTROLLIERTE KEIMBILDUNG VON DENDRITISCHEN POLYMEREN**
POLYMERIC NANOCOMPOSITE MATERIALS OBTAINED BY CONTROLLED NUCLEATION OF DENDRITIC POLYMERS
MATIERES PREMIERES NANO-COMPOSITES POLYMERES PRODUITS PAR FORMATION DE NOYAU REGULEE DE POLYMERES DENTRITIQUES

(30) Priorität: 27.11.2004 DE 102004057430
(43) Veröffentlichungstag der Anmeldung: 10.10.2007
(73) Patentinhaber: Evonik Degussa GmbH, 45128 Essen (DE)
(72) Erfinder: SEILER, Matthias, 64347 Griesheim (DE); CAVALEIRO, Pedro, 41749 Viersen (DE); LEHMANN, Kathrin, 51377 Leverkusen (DE); WEYERSHAUSEN, Bernd, 45127 Essen (DE); SCHWARZ, Markus, 45721 Haltern am See (DE); SCHMIDT, Friedrich Georg, 45721 Haltern am See (DE)
(86) Internationale Anmeldenummer: PCT/EP2005/056213
(87) Internationale Veröffentlichungsnummer: WO 2006/056596

(56) Entgegenhaltungen:
- WO-A-00/26267

## Beschreibung

Die Erfindung betrifft ein Verfahren zur Herstellung von polymeren Nano-Kompositwerkstoffen für Beschichtungen, Verpackungen oder Behälter mit verbesserten Permeabilitätseigenschaften und mechanischen Eigenschaften, erzeugt durch kontrollierte Keimbildung von dendritischen Polymeren in der Polymermatrix.

Für zahlreiche Kunststoff-basierte Verpackungen, Behälter oder Beschichtungen sind eine möglichst geringe Gas- und Flüssigkeitspermeabilität bei gleichzeitig guten mechanischen Eigenschaften essentiell. Es gibt unterschiedliche Wege, eine Spenwirkung gegen die Permeation von Gasen oder Flüssigkeiten in einem polymeren Verpackungs- oder Beschichtungsmaterial zu erzeugen.

Ein Weg stellt das Aufbringen einer Sperrschicht auf die Oberfläche dar. Diese Methode hat den überwiegenden Nachteil, dass sie anfällig gegen mechanische oder chemische Beschädigung ist Daher geht man zunehmend dazu über, die Polymermatrix (Basispolymer) mit spenwirkungserzeugenden Komponenten (Barrier-Komponenten) zu mischen.

Aufgrund ihres vorteilhaften Volumen/Oberfläche-Verhältnisses werden als Barrier-Komponenten mineralische Verbindungen mit Schichtstrukturen verwendet, insbesondere Silicate wie Hectorit und Montmoriollite (Clay).

Die hydrophilen Clays sind einmal mit den überwiegend unpolaren Basispolymeren nur unzureichend bis nicht verträglich, zum anderen ist die cohäsive Energie zwischen den einzelnen Schichten so groß, dass eine direkte Zerkleinerung der Teilchen und deren Dispersion in Basispolymeren nicht möglich ist

Zur Verbesserung der Verträglichkeit mit den Basispolymeren und zur Erleichterung der Zerkleinerung und Verteilung in Polymeren müssen sie daher organisch modifiziert werden.

Gemäß Offenbarung in der WO-A-00/78855 können zur Modifizierung der Clays insbesondere Oniumsalze wie Ammonium- oder Phosphoniumsalze verwendet werden oder gemäß WO-A-93/041188 wird der hydrophile smektische Clay durch Adsorption von Silanen in einen "organophilen" Clay umgewadelt.

Anstelle der Oniumsalze wird in der WO-A-03/016392 vorgeschlagen, Dendrimere oder hyperverzweigte Polymere zur Modifizierung der Schichtsilicate zu verwenden. Diese sollen den Schichtabstand weitaus mehr ausweiten und daher die Zerkleinerung der Teilchen und deren Verteilung in den Basispolymeren sehr erleichtern.

Die Effektivität der Sperrwirkung gegen Gas- und Flüssigkeitspermeation in Barrier-Blends oder Nanocomposites, die Güte der mechanischen Eigenschaften, die Kratzfestigkeit, der Glanz und die Abriebbeständigkeit, die Chemikalienbe-ständigkeit und die easy-to-clean Eigenschaften von Systemen bestehend aus einem Basispolymer und einer polymeren Barrier-Komponente (diese Systeme werden im Folgenden Barrier-Blends genannt) sowie von Nanocomposites hängen wesentlich von der Verteilungshomogenität und dem Volumengehalt der Barrieromponenten bzw. der Nanopartikel (diskontinuierliche Phase) ab. Sie sind um so besser, je gleichmäßiger eine feste diskontinuierliche Phase im Basispolymer verteilt und je höher ihr Volumenanteil ist

Die Barrier-Komponenten des Standes der Technik bedürfen einer aufwändigen Vorbehandlung. Trotzdem ist eine stabile homogene Verteilung von Barrier-Komponenten oder Nanopartikeln nur bei relativ geringen Konzentrationen realisierbar, einem Konzentrationsbereich, der nur eine geringe Sperrwirkung gegen Gas- und Flüssigkeitspermeation erlaubt Eine Erhöhung der Konzentration an Barrier-Komponenten kann die Sperrwirkung zwar weiter verbessern, jedoch werden die mechanischen Moduli des Barrier-Blends aufgrund einer zunehmenden inhomogeneren Verteilung der diskontinuierlichen Phase schlechter.

Des Weiteren ist die für viele Verpackungen erstrebenswerte Transparenz für die meisten konventionellen Barrier-Komponenten oder Nanopartikel in einem Konzentrationsbereich, der eine ausreichende Sperrwirkung gegen Gas- und Flüssigkeitspermeation erlaubt, nicht mehr realisierbar und zudem verlieren viele konventionelle Barrier-Blends bei Kontakt mit Wasser ihre Sauerstoffsperrwirkung, weshalb oftmals komplexe, vielschichtige Barrier-Systeme mit einem sogenannten Sandwich-Aufbau eingesetzt werden.

Ein weiterer Nachteil des Stands der Technik besteht darin, dass Beschichtungen mit einer niedrigen Gas- oder Flüssigkeitspermeabilität häufig eine unzureichende Kratzfestigkeit, Abriebfestigkeit, Benetzungsfähigkeit, Chemikalien-beständigkeit oder ein schlechtes Pigmentbindevermögen bei gleichzeitig zu hoher Schmelzviskosität und zu hohem Gleitwert zeigen.

Es bestand daher ein Bedarf an Barrier-Komponenten und Nanopartikeln, die diese Nachteile des Standes der Technik beheben, d. h. die ohne aufwändige Vorbehandlung auch in hohen Konzentrationen mit dem Basispolymer stabil, homogen mischbar und mitunter auch transparent sind sowie Kratzfestigkeit, Pigmentbindevermögen oder viskositätsbedingte Verarbeitungsfähigkeit verbessern können.

Diese Aufgabe wird gelöst durch kontrollierte Keimbildung von dendritischen Polymeren in der Polymermatrix. Die dendritischen Polymere umfassen sowohl die polydispersen hyperverzweigten Polymere als auch die monodispersen Dendrimere.

Gegenstand der Erfindung ist ein Verfahren zur Herstellung von Polymermischungen, dadurch gekennzeichnet, dass nanoskalige Agglomerate aus dendritischen Polymeren mit einer Molmasse zwischen 400 und 100000 g/mol durch Temperaturabsenkung unter die obere kritische Lösungstemperatur oder Temperaturerhöhung über die untere kritische Lösungstemperatur des Systems in einer Polymermatrix erzeugt werden und das System durch Polymerisation, Temperaturänderung, UV-Härtung, Druckabsenkung, Tempern oder Verdampfung flüchtiger Systemkomponenten in den festen Aggregatzustand überführ wird.

Weiterhin ist Gegenstand der Erfindung ein Verfahren,
dadurch gekennzeichnet,
dass die nanoskaligen Polymeragglomerate aus einem oder mehreren dendritischen Polymeren mit einer Glastemperatur über 10 °C bestehen und eine Konzentration in der Polymermischung von maximal 50 Massen-%, bevorzugt von maximal 40 Massen-% und besonders bevorzugt von maximal 30 Massen-% haben.

Unter dem Begriff "hyper- bzw. hochverzweigte Polymere" wird eine Klasse innovativer Materialien verstanden, die durch eine gegebenenfalls unregelmäßig geformte globuläre Molekülstruktur und durch eine große Anzahl an funktionellen Gruppen im Molekül charakterisiert ist. Die hochgradig verzweigte Molekülgestalt führt zu einer besonderen Kombination von Eigenschaften wie beispielsweise niedrige Schmelz- bzw. Lösungsviskosität sowie ein ausgezeichnetes Lösungsverhalten gegenüber zahlreichen Lösungsmitteln.

Die hochverzweigten, globulären Polymere werden in der Fachliteratur auch als "dendritische Polymere" bezeichnet. Diese dendritischen Polymere lassen sich in zwei unterschiedliche Kategorien einteilen, die "Dendrimere" sowie die "hyperverzweigten Polymere". Dendrimere sind höchst regelmäßige, dreidimensionale, monodisperse Polymere mit einer baumartigen, globulären Struktur. Dabei ist die Struktur durch drei unterscheidbare Bereiche charakterisiert: Einem polyfunktionellen zentralen Kern, der das Symmetriezentrum darstellt, verschiedene wohldefinierte radialsymmetrische Schichten einer Widerholungseinheit und die Endgruppen. Die hyperverzweigten Polymere sind im Gegensatz zu den Dendrimeren polydispers und hinsichtlich ihrer Verzweigung und Struktur unregelmäßig. Jeweils ein Beispiel für ein Dendrimer und ein hochverzweigtes Polymer, aufgebaut aus Wiederholungseinheiten, welche jeweils drei Bindungsmöglichkeiten aufweisen, ist in den nachfolgenden Strukturen gezeigt:

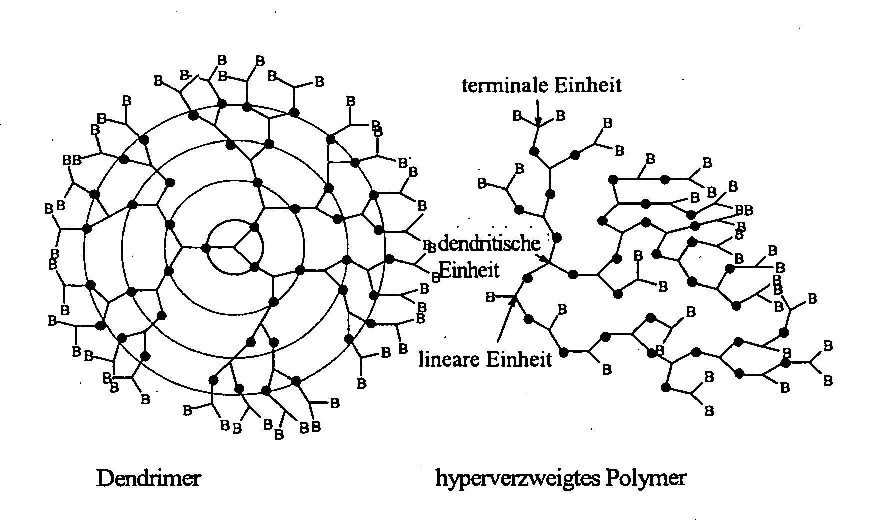

Über die unterschiedlichen Möglichkeiten zur Synthese der Dendrimere und hyperverzweigten Polymere sei auf Fréchet J.MJ., Tomalia D.A., Dendrimers and Other Dendritic Polymer, John Wiley & Sons, Ltd., West Sussex, UK 2001 und Jikei M., Kakimoto M., Hyperbranched polymers: a promising new class of materials, Prog. Polym. Sci., 26 (2001) 1233-1285 verwiesen, die hiermit als Referenzen eingerührt werden und als Teil der Offenbarung der vorliegenden Erfindung gelten. Die in dieser Druckschrift beschriebenen hochverzweigten Polymere sind auch im Sinne der vorliegenden Erfindung bevorzugte hochveizweigte Polymere.

Vorzugsweise werden im erfindungsgemäßen Verfahren hyperverzweigte Polymere als hochverzweigte Polymere zur Erzeugung einer nanoskaligen diskontinuierlichen Phase eingesetzt. In diesem Zusammenhang ist es bevorzugt, dass die hyperverzweigten Polymere mindestens 3 Wiederholungseinheiten pro Molekül, vorzugsweise mindestens 10 Wiederholungseinheiten pro Molekül, ferner bevorzugt mindestens 100 Wiederholungseinheiten pro Molekül, zudem bevorzugt mindestens 200 Wiederholungseinheiten und darüber hinaus bevorzugt mindestens 400 Wiederholungseinheiten aufweist, die jeweils mindestens drei, bevorzugt mindestens vier Bindungsmöglichkeiten aufweisen, wobei mindestens 3 dieser Wiederholungseinheiten, besonders bevorzugt mindestens 10 und darüber hinaus bevorzugt mindestens 20 jeweils über mindestens drei, bevorzugt über mindestens vier Bindungsmöglichkeiten mit mindestens drei, bevorzugt mindestens vier weiteren Wiederholungseinheiten verknüpft sind. Verschiedentlich weisen die hyperveizweigten Polymere maximal 10 000, vorzugsweise maximal 5 000 und besonders bevorzugt maximal 2 500 Weiderholungseinheiten auf

Dabei wird unter dem Begriff "Wiederholungseinheit" vorzugsweise eine stets wiederkehrende Struktur innerhalb des hyperverzweigten Moleküls verstanden. Unter dem Begriff "Bindungsmöglichkeit" wird vorzugsweise diejenige funktionelle Struktur innerhalb einer Wiederholungseinheit verstanden, mit der eine Verknüpfung zu einer anderen Wiederholungseinheit möglich ist. Bezogen auf die vorstehend dargestellten Beispiele eines Dendrimers bzw. hyperverzweigten Polymers ist die Wiederholungseinheit eine Struktur mit jeweils drei Bindungsmöglichkeiten (X,Y,Z):

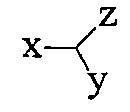

Die Verknüpfung der einzelnen Bindungseinheiten miteinander kann durch Kondensationspolymerisation, radikalische Polymerisation, anionische Polymerisation, kationische

Polymerisation, Gruppentransferpolymerisation, koordinative Polymerisation oder Ringöffnungpolymerisation erfolgen.

Besonders bevorzugte hyperverzweigte Polymere sind Polymere, bei denen die Bindungseinheiten zwei Bindungsmöglichkeiten aufweisen. In diesem Zusammenhang bevorzugte hyperverzweigten Polymere sind Polyether, Polyester, Polyesteramide und Polyethylenimine. Unter diesen Polymeren besonders bevorzugt sind die bereits kommerziell unter der Marke Boltorn^{®} bei der Firma Perstorp AB erhältlichen hyperverzweigten Polyester, die als Polyimin^{®} bei der Firma BASF AG erhältlichen hyperverzweigten Polyethylenimine sowie die unter der Marke Hybrane^{®} bei der Firma DSM BV, Niederlande erhältlichen hyperverzweigten Polyesteramide. Ein anderes Beispiel für ein hyperverzweigtes Polymer ist ein Polyglycerin Polymer mit der Typenbezeichnung PG-2, PG-5 und PG-8 der Firma Hyperpolymers GmbH. Zudem sind Polyethylenimine mit der Typenbezeichnung PEI-5 sowie PEI-25 der Firma Hyperpolymers GmbH zu nennen.

Es ist weiterhin bevorzugt, wenn die im erfindungsgemäßen Verfahren als Zusatzstoffe eingesetzten hyperverzweigten Polymere neben den eingangs genannten Schmelzpunkten und Dampfdrücken mindestens eine, vorzugsweise alle, der folgenden Eigenschaften aufweisen:
(α1) ein Verhältnis M_{W}/M_{N} ― bestimmt durch Kombination von Analysemethoden, insbesondere durch Kombination von Dampfdruck- und Membranosmometrie, gegebenenfalls aber auch durch Gelpermeationschromatographie (GPC bzw. SEC) oder Matrix Assisted Laser Desorption Ionization Time of Flight (MALDI-TOF) - Massenspektroskopie ― in einem Bereich von 1 bis 20, besonders bevorzugt in einem Bereich von 1,05 bis 10 und darüber hinaus bevorzugt in einem Bereich von 1,1 bis 5 aufweisen, wobei M_{W} das Massenmittel der Molamasse und M_{N} das Zahlenmittel der Molmasse ist;
(α2) ein Massenmittel der Molmasse M_{W} in einem Bereich von 100 bis 500 000 g/mol, besonders bevorzugt in einem Bereich von 400 bis 100 000 g/mol und darüber hinaus bevorzugt in einem Bereich von 1000 bis 50 000 g/mol;
(α3) eine Glastemperatur T_{g}, bestimmt mittels Differential Scanning Calometrie (DSC), die größer als-30° C, besonders bevorzugt größer als 0° C und darüber hinaus bevorzugt größer als 10° C ist;
(α4) das hyperverzweigte Polymer oder deren Mischung ist bis zu einer Temperatur von 100 °C, besonders bevorzugt bis zu einer Temperatur von 150 °C, darüber hinaus bevorzugt bis zu einer Temperatur von bis zu 200 °C und weiterhin bevorzugt bis zu einer Temperatur von 300 °C stabil, wobei unter dem Begriff stabil verstanden wird, dass bis zu der jeweiligen Temperatur keine Zersetzung des Polymers beispielsweise durch Bildung gasförmiger Spaltprodukte, insbesondere Kohlendioxid oder Wasser, bis zu einer Grenze von unter 10 ppm, vorzugsweise von unter 1 ppm und besonders bevorzugt 0,1 ppm gaschromatographisch nachweisbar ist

Bevorzugte Ausführungsformen der hyperverzweigten Polymere ergeben sich aus den einzelnen Eigenschaften und von Kombinationen aus mindestens zwei dieser Eigenschaften. Besonders bevorzugte hyperverzweigte Polymere sind Polymere, die durch die folgenden Eigenschaften bzw. Kombinationen von Eigenschaften gekennzeichnet sind: α1, α2, α3, α4, α1α2, α1α3, α1α4, α2α3, α2α4, α3α4, α1α2α3, α1α2α4, α1α3α4, α2α3α4, α1α2α3α4.

Besonders geeignet sind dabei solche hyperverzweigten Polymere, die eine Molmasse zwischen 400 g/mol und 10 0000 g/mol besitzen und durch Polykondensation, Additions- oder Ringöffnungsreaktionen - wie von [Jikei, M., Kakimoto, M. in: Progress in Polymer Science, 2001, 26, 1233; Sunder, A., Heinemann, J., Frey, H. in: Chemistry a European Journal, 2000, 6, 2499; Voit, B. in: Journal of Polymer Science, Part A: Polymer Chemistry 2000, 38, 2505] beschrieben - von ABm-Monomeren mit zueinander komplementären A und B-Funktionen erhalten werden, wobei eine hochverzweigte Polymerstruktur entsteht, die maximal einen Zyklus (eine intramolekulare Vernetzung) pro Molekül enthält [Sunder, A., Heinemann, J., Frey, H. in: Chemistry a European Journal, 2000, 6, 2499; Voit, B. in: Journal of Polymer Science, Part A: Polymer Chemistry 2000, 38, 2505; Jikei, M., Kakimoto, M. in: Progress in Polymer Science, 2001, 26, 1233].

Bei der Polymerisation von ABm-Monomeren können bis zu 95 % lineare oder zyklische AB-Monomere zugegeben werden, ferner polyfunktionelle Moleküle mit Bf-Struktur, ohne dass die grundsätzliche hyperverzweigte Struktur verloren geht [Sunder, A., Heinemann, J., Frey, H. in: Chemistry a European Journal, 2000, 6, 2499; Voit, B. in: Journal of Polymer Science, Part A: Polymer Chemistry 2000, 38, 2505; Kim, Y. H. in: Journal of Polymer Science, Part A: Polymer Chemistry, 1998, 36, 1685; Hult, A., Johansson, M., Malmström, E. in: Advances in Polymer Science, 1999, 143 sowie Sunder, A., Hanselmann, R, Frey, H., Mülhaupt, R in: Macromolecules 1999, 32, 4240; Jikei, M., Kakimoto, M. in: Progress in Polymer Science, 2001, 26, 1233]. Neben kondensationsfähigen ABm-Monomeren können auch latente AB*-Monomere zur Synthese hyperveizweigter Polymere eingesetzt werden, bei denen erst während der Polymerisation die zweite B-Gruppe für die Verzweigung aktiviert wird. Dies ist bei der selbstkondensierenden Vinylpolymerisation (SCVP) und bei der selbstkondensierenden Ringöffnungspolymerisation (SCROP) der Fall.

Zur Durchführung des Verfahrens ist eine Polymermatrix - bestehend aus einem oder mehreren Basispolymer(en) ― anwendungsspezifisch auszuwählen. Prinzipiell ist jedes schmelzbare Polymer geeignet

Für Verpackungen oder Behälter eignen sich als Basispolymer z. B. Polyethylenterephthalat, Polypropylen, Polyethylen, Polystyrol, Polyvinylchlorid, Polyamid, Polyvinylalkohol, während für Lacke bzw. Beschichtungen insbesondere Nitrocellulose, chlorierter Naturkautschuk, Polyisocyanate, Polyharnstoffe, Polyurethane, aliphatische, aromatische und/oder cycloaliphatische, gesättigte und/oder ungesättigte Polyester und/oder funktionalisierte Polyester, Polyvinylcopolymere, Polyvinylacetat, Polyacryl- oder Polymethacrylsäureester, vernetzungsfähige Acrylharzsysteme, Isoborylacylatsysteme, Epoxidharze, Keton-Aldehyd-Harze, Polyester aus Terephthal- und Isophthalsäure, Polyurethane, Polyaddukte aus Bisphenol-A und Epichlorhydrin, Isufurondiamin-basierte Systeme sowie Polymersysteme aus Polyester und/oder Polyolen geeignet sind. Formulierungen für strahlenhärtende Beschichtungen sind bekannt und beispielsweise in "UV & EB curing formulation for printing inks, coatings & paints" (R. Holman, P. Oldring, London 1988) und "The Formulation of UV-Curable Powder Coatings" (J. Bender, K. Lehmann et al., RadTech Europe 1999, Conference Proceedings, Seite 615 f.) beschrieben.

### Die Polymere weisen bevorzugt eine Molmasse von mindestens 30 000 g/mol auf

In Abhängigkeit von der Polymermatrix ist nun ein geeignetes dendritisches, vorzugsweise hyperveizweigtes Polymer auszuwählen, das sich homogen in der Polymermatrix löst

Zum Lösen des dendritischen Polymers in der Polymermatrix wird die Polymermischung in einem Rührbehälter ausgehend von Raumtemperatur unter Rühren so lange erhitzt, bis die Polymermischung transparent ist.

Prinzipiell kann zu jeder Polymermatrix ein geeignetes dendritisches Polymer gefunden werden, indem die Grundsätze "Gleiches löst Gleiches" berücksichtigt werden. Je nach Natur der Polymermatrix (polar/unpolar), wählt man aus der großen Bandbreite kommerziell erhältlicher dendritischer Makromoleküle ein Polymer aus, dessen funktionelle Gruppen attraktiv Wechselwirkungen mit der Polymermatrix eingehen.

Um eine gute Löslichkeit des dendritischen Polymers in der Polymermatrix zu erhalten, sollten zwischen Matrix und dendritischem Polymer die Polaritätsunterschiede gering, die intermolekularen attraktiven Wechselwirkungen gegenüber den repulsiven Wechsel-wirkungen dominieren und die intramolekularen Polymerwechselwirkungen nur von geringem Ausmaß sein.

Das Ausmaß an inter- und intramolekularen Wechselwirkungen kann durch spektroskopische Methoden wie der Infrarot (IR) Spektroskopie bestimmt werden (Ullmann's Encyclopedia of Industrial Chemistry (1994), Vol. B5, S. 429-559). Als intermolekulare Kräfte treten dabei Ionenkräfte, Dipol-Dipol-Kräfte, Induktionskräfte, Dispersionskräfte und Wassersboff-Brückenbindungen auf, (Ullmann's Encyclopedia of Industrial Chemistry (1993), Vol. A24, S. 438-439). Die Einstellung dieser Kräfte wird bei den dendritischen Polymeren durch die Variation der Anzahl und der Art an funktionellen Gruppen gelöst Die Anzahl der funktionellen Gruppen eines dendritischen Polymers kann durch Nuclear Magnetic Resonance (NMR) - Spektroskopie und die Molmasse eines dendritischen Polymers durch Kombination von Analysemethoden, insbesondere durch Kombination von Dampfdruck- und Membranosmometrie, gegebenenfalls aber auch durch Gelpermeationschromatographie (GPC bzw. SEC) oder Matrix Assisted Laser Desorption Ionization Time of Flight (MALDI-TOF) - Massenspektroskopie bestimmt werden (Ullmann's Encyclopedia of Industrial Chemistry (1994), Vol. B5, S.155-179 und S. 429-559).

Zu einer polaren Polymermatrix, die z. B. aus einem Polyester besteht, wird vorzugsweise ein polares dendritisches Polymer z B. mit OH-Gruppen als funktionelle Gruppen (beispielsweise ein hyperverzweigter Boltom^{®}-Polyester der Firma Perstorp oder ein hyperverzweigter Polyether der Firma Hyperpolymers) verwendet Bei den dendritischen Polymeren sind bevorzugt niedermolekulare Proben im Molmassenbereich zwischen 400 und 100 000 g/mol, besonders bevorzugt zwischen 1000 und 50 000 g/mol verwendbar. Die Glastemperatur des dendritischen Polymers soll größer als 10 °C sein. Die Glastemperatur dendritischer Polymere steigt mit zunehmender Endgruppenpolarität Bei der sich anschließenden Prozedur ist zwischen Polymersystemen mit oberer kritischer Lösungstemperatur (UCST) und Systemen mit unterer kritischer Lösungstemperatur (LCST) zu unterscheiden. Befindet man sich in der Flüssig-Flüssig Mischungslücke einer Polymerschmelze oder Polymerlösung, so ist das System trüb. Bei Mischungslücken mit UCST verschwindet die Trübung des Polymersystems bei ausreichender Temperaturerhöhung, während bei Systemen mit LCST die Trübung durch Temperaturerniedrigung verschwindet Prinzipiell sind nur solche Polymermischungen für das erfindungsgemäße Verfahren geeignet, die
a) eine LCST > 0 °C oder
b) eine UCST < 250°C oder
c) eine geschlossene Mischungslücke wie in Chem. Eng. Technol., 25 (2002) 237-253 beschrieben aufweisen.

In dem homogen-flüssigen System (bestehend aus einer Polymermatrix und einem dendritischen Polymer) wird nun durch kontrollierte, langsame Temperaturänderung die Löslichkeit des dendritischen Polymers im Gesamtsystem kontinuierlich reduziert, bis beim Überschreiten der Binodalen oder Trübungskurve (der sogenannten oberen oder unteren Lösungstemperatur UST oder LST wie in Macromolecules, 36 (2003) 2085-2092 beschrieben) sich erste Keime einer zweiten - aus dem dendritischen Polymer bestehenden - flüssigen Phase bilden. Die vorzunehmende Temperaturänderung repräsentiert bei Systemen mit LCST eine Temperaturerhöhung mit einer Heizrate von < 10 K pro Minute und bei Systemen mit UCST eine Temperaturemiedrigung mit einer Kühlrate von < 10 K pro Minute.

Da diese nanoskaligen Keime in situ entstehen, sind bei Systemtemperaturen, die geringfügig unter der oberen Lösungstemperatur oder geringfügig über der unteren Lösungstemperatur liegen, diese Keime äußerst "klein" (wenige nm) und äußerst gleichmäßig im System verteilt Mit fortschreitendem Eindringen in die LCST- oder UCST-Mischungslücke mittels Temperaturänderung nimmt die Anzahl an gebildeten dendritischen Keimen und auch ihre Größe zu. Die diskontinuierliche Phase kann praktisch in Bezug auf Tropfengröße und Tropfenanzahl/Tropfendichte maßgeschneidert werden.

Der geeignete Temperaturbereich für die Bildung der angestrebten Keime liegt für LCST-Systeme bevorzugt bei T_{LCST} < T < (T_{LCST} + 50 K) besonders bevorzugt bei T_{LCST} < T < (T_{LCST} + 20 K) und für UCST-Systeme bevorzugt bei T_{UCST} > T > (T_{UCST} ― 50 K) besonders bevorzugt bei T_{UCST} > T > (T_{UCST} - 20 K).

Die durchschnittliche Tropfengröße der dispersen Phase ― diese wird z.B. durch Lichtstreuungsversuche (wie von J. Mewis et al. in Chemical Engineering Science, Volume 53, Issue 12, Pages 2231-2239 beschrieben) experimentell bestimmt — sollte nicht größer als 1 µm sein.

Ausgehend von der Keimbildungsendtemperatur wird dieser für die Permeationseigenschaften und mechanischen Eigenschaften des Produkts besonders geeignete Zustand einer äußerst homogen verteilten, nanoskaligen dispersen Phase durch Polymerisation, inter- und/oder intramolekularer Vernetzung, Tempern, UV-Härtung, Druckabsenkung und/oder Verdampfung flüchtiger Systemkomponenten in den festen Aggregartzustand überführt und somit fixiert bzw. "eingefroren".

In einer Ausführungsform ist das Verfahren dadurch gekennzeichnet, dass die Verteilungshomogenität und Agglomeratgröße der dispersen Phase in der Polymermischung durch Temperaturänderungen eingestellt werden und das Gesamtsystem für mindestens eine Temperatur zwischen 20 und 200 °C eine Dispersion aus zwei flüssigen Phasen oder einer festen und mindestens einer flüssigen Phase darstellt

In einer weiteren Ausfübrungsform ist das Verfahren dadurch gekennzeichnet, dass feste Nanopartikel mit einem oder mehreren dendritischen Polymeren durch Fällung, Sprühtrocknung, Sprühgranulation, Prozessen mit komprimierten Gasen wie GAS, RESS, PGSS und PCA überzogen werden, durch Rühren im Temperaturbereich zwischen 10 °C und 200 °C, bevorzugt zwischen 20 °C und 150°C in der Polymermatrix dispergiert werden, und dendritische Polymere mit einer Gesamtkonzentration von maximal 20 Massenprozent in der Polymermischung enthalten sind

Bevorzugt ist das dendritische Polymer ein hyperverzweigter aliphatischer Polyester, hyperverzweigter aromatisch-aliphatischer Polyester, hyperverzweigtes Polyamid, hyperverzweigtes Polycarbonat, hyperverzweigtes Polyetheresteramid, hyperverzweigter Polyetherester, hyperverzweigtes Polyesteramid, hyperverzweigter Polyether, hyperveizweigtes Polyethersiloxan, hyperverzweigtes Polyethylenimin, hyperverzweigtes Polyurethan, hyperverzweigter Polyharnstoff, hyperverzweigtes Polyisocyanat oder ein hyperverzweigtes Polyamidoamin ist und bei 150 °C zu mindestens 3 Massenprozent homogen in der Polymermatrix gelöst werden kann.

Es ist auch möglich, dass die dendritischen Polymere zusätzlich funktionell Gruppen, wie OH-, NH₂-, NCO- und/oder COOH-Gruppen enthalten.

Aufgrund der guten Kompatibilität von dendritischen Polymeren mit anderen Komponenten sowie der durch die verzweigte dendritische Molekülstruktur reduzierten Viskosität der zu verarbeitenden Polymermischung können in einer alternativen Variante des erfindungsgemäßen Verfahrens dem System vor dem überführen in den kristallinen, teilkristallinen oder amorphen festen Aggregatzustand wahlweise noch Additive hinzugegeben werden, um eine Feinabstimmung des Eigenschaftsprofils des Nano-Kompositwerkstoffes zu ermöglichen. Aufgrund des amphiphilen Molekülaufbaus vieler dendritischer Polymere lagern sich geeignete Additive nach einer behutsamen Rührphase überraschenderweise um die nanoskaligen Agglomerate herum an, so dass die dendritischen Polymere somit eine kompatibilitäts- und dispergierfördernde Zusatzfunktion übernehmen.

Als Additive können in den erfindungsgemäßen Verfahren folgende Verbindungen besonders vorteilhaft eingesetzt werden:
- Modifizierte Acrylate wie Acrylatgruppen enthaltende Organopolysiloxane, Epoxyacrylate, Urethanacrylate oder Polyetheracrylate,
- Anorganische Pigmente aus Titanoxid, Eisenoxid, Chromoxid, Chromat oder organische Pigmente wie Ruß, Anthrachinon-, Azo-, Flavanthron-, Phthalocyanin- Pigmente,
- Photoinitiatoren,
- Silikonöle oder organisch modifizierte Siloxane und
- Siliconzusatzmittel.

Die Verbindungen können als Additive in den erfindungsgemäßen Nano-Kompositbeschichtungen, die auch strahlenhärtbar sein können, eingesetzt werden. Sie weisen nicht die Nachteile der Additive des Standes der Technik auf und bewirken in strahlenhärtbaren Beschichtungen eine erhebliche Verbesserung der Kratzfestigkeit und Gleitfähigkeit sowie des Release-Verhaltens. Sie können in üblicher Weise mit Härtungsinitiatoren, Füllstoffen, Pigmenten, anderen bekannten Acrylatsystemen und weiteren üblichen Zusatzstoffen compoundiert werden. Die Verbindungen können dreidimensional durch freie Radikale vernetzt werden und härten thermisch unter Zusatz von z.B. Peroxiden oder unter Einfluss energiereicher Strahlung, wie UV- oder Elektronenstrahlung, innerhalb kürzester Zeit zu mechanisch und chemisch widerstandsfähigen Schichten aus, die bei geeigneter Zusammensetzung der Verbindungen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivate, oder Benzoin und entsprechende substituierte Benzoinderivate.

Photoinitiatoren und/oder Photosensibilisatoren werden in den die Organopolysiloxane enthaltenden Zusammensetzungen vorzugsweise in Mengen von 0,01 bis 10 Nassen-%, insbesondere von 0,1 bis 5 Massen-%, jeweils bezogen auf das Gewicht der acrylatfunktionellen Organopolysiloxane, verwendet.

Gegenstand der Erfindung sind auch Polymermischungen, die nach dem erfindungsgemäßen Verfahren hergestellt wurden. Gegenstand der Erfindung sind daher Polymermischungen, dadurch erhalten, dass nanoskalige Agglomerate aus dendritischen Polymeren mit einer Molmasse zwischen 400 und 100 000 g/mol durch Temperaturabsenkung unter die obere kritische Lösungstemperatur oder Temperaturerhöhung über die untere kritische Lösungstemperatur des Systems in einer Polymermatrix erzeugt werden und das System durch Polymerisation, Temperaturänderung, UV-Härtung, Druckabsenkung, Tempern oder Verdampfung flüchtiger Systemkomponenten in den festen Aggregatzustand überführt wird

Aufgrund der (im Vergleich zu linearen Polymeren) niedrigen Schmelz- und Lösungsviskosität sowie der kompatibilitäts- und dispergierfördernden Eigenschaften dendritischer Polymere wurde überraschenderweise gefunden, dass die gemäß hergestellten Polymermischungen für Beschichtungen, Verpackungen oder Behälter weniger Lösungsmittel erfordern, als die meisten Verfahren des Stands der Technik.

Gegenstand der Erfindung ist auch die Verwendung der erfindungsgemäß hergestellten Polymermischung für Beschichtungen, Verpackungen und Behälter.

Die nach dem erfindungsgemäßen Verfahren hergestellten Polymermischungen eignen sich besonders für Beschichtungen mit einer verbesserten Sperrwirkung gegen Gas- und Flüssigkeitspermeation, verbesserten mechanischen Eigenschaften, einer verbesserten Kratzfestigkeit, Abriebbeständigkeit, Chemikalienbeständigkeit oder verbesserten easy-to-clean Eigenschaften. Es können die im Stand der Technik beschriebenen Techniken zur Filmerzeugung bzw. Filmauftragung (Coating-Verfahren) angewendet werden. Bevorzugte Coating-Verfahren sind dabei Rakel- und Tauchverfahren, Spraycoating, Spincoating, Walz- oder Gießverfahren.

Nachfolgende Beispiele sollen zur Verdeutlichung der Erfindung dienen; sie stellen jedoch keinerlei Einschränkung dar.

### Beispiel 1:

Verwendung eines hyperverzweigten Additivs in verschiedenen UV-härtenden Lacksystemen

Herstellung eines hyperverzweigten polyestermodifiziertem Polyethylenimin

### Verbindung 1:

44 g hyperverzweigtes Polyethylenimin (Lupasol PR 8515, BASF AG) und 1152 g epsilon-Caprolacton wurden in einem Rundkolben vorgelegt und mit 1,2 g Zinndioctoat versetzt.

Der Ansatz wurde 6 Stunden bei 160 °C gerührt.
Es entstand ein kristallines Produkt mit einem Schmelzbereich zwischen 42 bis 47 °C.
Der Feststoffanteil des Reaktionsprodukts beträgt nach Erhitzen (1 Stunden bei 120°C) 99,2 Massen-%.

Im Folgenden werden die anwendungstechnischen Eigenschaften verschiedener erfindungsgemäß zu verwendender Verbindungen gezeigt.

Als erfindungsgemäße zu verwendende Verbindungen wurden die Verbindungen 1 getestet

Zur Überprüfung der anwendungstechnischen Eigenschaften werden die folgenden Druckfarbenrezepturen ausgewählt (Mengenangaben in Massen-%):
Rezeptur 1:

| | |
|---|---|
| Ebecryl^{®} 605 | 44,7 Teile aromat Polyetheracrylat, UCB |
| Lauromer^{®} TPGDA | 45,3 Teile Tripropylenglycoldiacrylat, BASF |
| Benzophenon | 5,0 Teile Benzophenon, Merck |
| Ebecryl^{®} P115 | 5,0 Teile aminfunktionelles Acrylat, UCB |

Rezeptur 2:

| | |
|---|---|
| Laromer^{®} PO84 F | 95,0 Teile Polyetheracrylat, BASF |
| Darocure^{®} 1173 | 3,0 Teile Photoinitiator, Merck |
| Ebecryl^{®} P 115 | 2,0 Teile aminfunktionelles Acrylat, UCB |

Die Druckfarben werden auf übliche Weise gemäß den vorstehenden Rezepturen bei 60 °C formuliert Als letzter Bestandteil wird jeweils die Verbindung 1 in einer Dosierung zwischen 3 und 10 Massen-% bezogen auf die Druckfarbe hinzugegeben, wobei die Einarbeitung mittels einer Perlmillscheibe eine Minute bei 2 500 U/min erfolgt. Vor dem Auftragen wird die additivierte Druckfarbe mit einer Kühlrate von 1 K/min unter Einhaltung der erfindungsgemäßen Temperaturbereiche auf 25 °C abgekühlt und 24 Stunden bei dieser Temperatur gelagert.

Die Druckfarben werden 12 µm naß auf corona-vorbehandelter PVC-Folie bei 25 °C aufgerakelt Die Härtung erfolgt durch Einwirkung von ultraviolettem Licht (UVH) mit 120 W/cm mit Bahngeschwindigkeiten von 20 m/min. Dieser Vorgang wird jeweils einmal wiederholt.

Für die Ermittlung der Trennwerte wird ein 25 mm breites Klebeband der Firma Beiersdorf verwendet, welches mit Kautschukkleber beschichtet ist und im Handel unter der Bezeichnung Tesa^{®} 4154 erhältlich ist, Zur Messung der Abhäsivität wird 5 Minuten respektive 24 Stunden nach Härtung der Druckfarbe dieses Klebeband mit 70 g/cm² aufgewalzt. Nach dreistündiger Lagerung bei Raumtemperatur wird die Kraft gemessen, die benötigt wird, um das jeweilige Klebeband mit einer Geschwindigkeit von 12 mm/s unter einem Schälwinkel von 180 vom Untergrund abzuziehen. Diese Kraft wird als Trennwert/Release-Wert bezeichnet.

Kratzfestigkeit ist die Widerstandsfähigkeit einer Oberfläche gegenüber sichtbaren, linienförmigen Beschädigungen durch sich bewegende, die Oberfläche berührende, harte Körper. Zur Messung sogenannter Kratzwerte dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt Mit Hilfe der Rakelhalterung kann die Platte, auf der das Substrat (mit Druckfarbe beschichteter Film) befestigt wird, bewegt werden. Um die Kratzbeanspruchung zu simulieren, wird ein Klotz mit drei Spitzen auf den Druckfarbfilm gesetzt und mit 500 g beschwert Die auf der Platte befindliche Prüffolie wird mit einer Geschwindigkeit von 12 mm/s unter dem Gewicht weggezogen. Die hierfür notwendige, vertikale Kraft wird gemessen und als Kratzwert bezeichnet. Die Ermittlung der Kratzwerte erfolgt jeweils 24 Stunden nach Aushärtung der Farben.

Ersetzt man den mit Spitzen versehenen Klotz durch einen Klotz mit flächiger Filzunterlage und verfährt man wie zuvor beschrieben, so misst man als Reibungskraft den sogenannten Gleitwert. Auch diese Prüfungen erfolgen jeweils 24 Stunden nach Aushärtung der Farben.

In den Tabellen 1 und 2 sind Durchschnittswerte von 5 Einzelmessungen wiedergegeben.

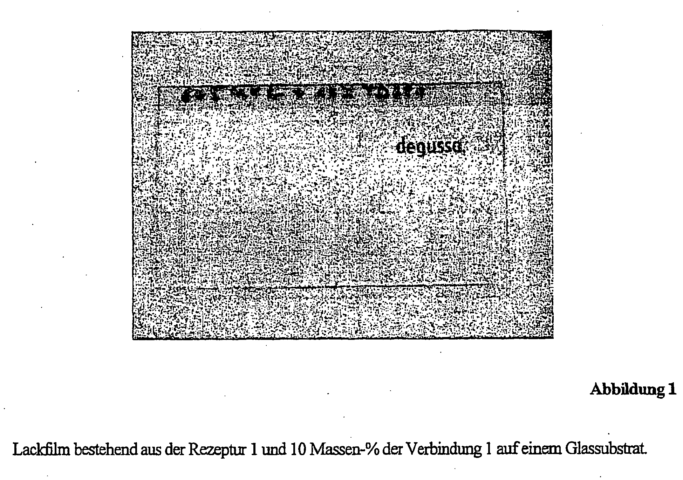

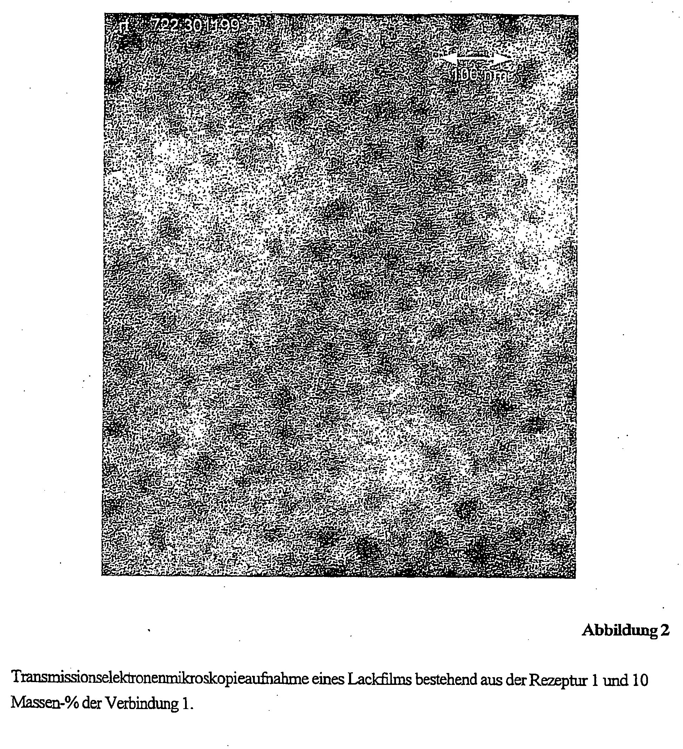

Die Transparenz des Lacks ist trotz der in Abbildung 2 zu erkennenden nanoskaligen - aus hyperverzweigten Polymeren bestehenden - diskontinuierlichen Phase bei allen untersuchten Proben gewährleistet. Abbildung 1 zeigt einen klaren und durchsichtigen gehärteten Lackfilm bestehend aus der Rezeptur 1 und 10 Massen-% der Verbindung 1 auf einem Glassubstrat.

In Abbildung 2 ist eine Transmissionselektronenmikroskopieaufnahme des in Abbildung 1 gezeigten Lackfilms. Es ist eine deutliche Phasenseparation zu erkennen. Für Transmissionselektronen-mikroskopieaufnahme wurden Dünnschnitte in einem Mikrotom (Ultracut E, Reichert-Jung) hergestellt. Die dicke der Schnitte betrug ca. 40 nm. Die Aufnahmen wurden mit einem Mikroskop von Zeiss (CEM 902) bei einer Beschleunigungsspannung von 80 kV sowie mit einem LEO 912 bei 120 kV durchgeführt.

**Tabelle 1:**

| (Rezeptur 1) | | | | |
|---|---|---|---|---|
| Verbindung | Konz in Massen-% | Gleitwert [cN] | Trennwert [cN] | Transparenz des Lacks |
| Blind | 0 | 412 | 1024 | klar und transparent |
| 1 | 3 | 128 | 910 | klar und transparent |
| 1 | 5 | 251 | 757 | klar und transparent |
| 1 | 10 | 255 | 746 | klar und transparent |

**Tabelle 2:**

| (Rezeptur2) | | | | |
|---|---|---|---|---|
| Verbindung | Konz in Massen-% | Gleitwert [cN] | Trennwert [cN] | Transparenz des Lacks |
| Blind | 0 | 449 | 1044 | klar und transparent |
| 1 | 3 | 290 | 886 | klar und transparent |
| 1 | 5 | 279 | 800 | klar und transparent |
| 1 | 10 | 322 | 816 | klar und transparent |

Die Tabellen 1 und 2 zeigen, dass durch Anwendung des erfindunsgemäßen Verfahrens unter Verwendung des erfindungsgemäßen hyperverzweigten Additivs gegenüber der Vergleichsprobe ohne Verbindung 1 (Blindwert) in beiden Lackrezepturen niedrigere Gleitwerte und Trennwerte erzielt werden.

### Beispiel 2:

Polymermatrix:
Polyethylenterephtalat; M_{w} = 100 000 g/mol
erfindungsgemäße Barrierkomponente:
hyperveizweigter Polyester
M_{w} = 10 500 g/mol
Polydispersität Mw/Mn =1,7
Hydroxy-Zahl = 26 mg KOH/g
Säurezahl = 8 mg KOH/g
Viskosität(80°C, 30s⁻¹)= 250 Pas
Schmelztemperatur = 60°C

Die erfindungsgemäße Barrierkomponente wurde durch Modifizierung des kommerziell erhältlichen hyperverzweigten Boltom^{®}H30 mit einer Mischung aus Arachinsäure und Behensäure erhalten. Der Funktionalisierungsgrad beträgt 90 % (bezogen auf die Hydroxy-Gruppen von Boltorn^{®}H30)

Die Hydroxyzahl wird gemäß ASTM E222 bestimmt Hierbei wird das Polymer mit einer definierten Menge an Essigsäureanhydrid umgesetzt. Nicht umgesetztes Essigsäureanhydrid wird mit Wasser hydrolysiert. Anschließend wird die Mischung mit NaOH titriert Die Hydroxyzahl ergibt sich aus dem Unterschied zwischen einer Vergleichsprobe und dem für das Polymer gemessenen Wert. Hierbei ist die Anzahl an Säuregruppen des Polymers zu berücksichtigen.

Das hyperverzweigte Polymer weist ein Molekulargewicht von 10500 g/mol auf Diese Größe bezieht sich auf das Gewichtsmittel des Molekulargewichts (Mw), welches mittels Gelpermationschromatographie gemessen werden kann, wobei die Messung in DMF erfolgt und als Referenz Polyethylenglykole eingesetzt werden (vgl. u.a. Burgath et al in Macromol.Chem. Phys., 201 (2000) 782 - 791). Hierbei wird eine Kalibierkurve eingesetzt, die unter Verwendung von Polystyrol-Standards erhalten wurde. Diese Größe stellt daher ein apparenter Meßwert dar.

Die Polydispersität Mw/Mn bevorzugter hyperverzweigter Polymere liegt vorzugsweise im Bereich von 1,01 bis 6,0, besonders bevorzugt im Bereich von 1,10 bis 5,0 und ganz besonders bevorzugt im Bereich von 1,2 bis 3,0, wobei das Zahlenmittel des Molekulargewichts (Mn) ebenfalls durch GPC erhalten werden kann.

Die Viskosität des hyperverzweigten Polymers kann mittels Rotationsviskosimetrie bei 80°C und 30 s⁻¹ zwischen zwei 20mm Platten gemessen werden kann.

Die Säurezahl kann durch Titration mit NaOH gemessen werden (vgl. DIN 53402).

Die Schmelztemperatur kann mittels Differential Scanning Calometry (DSC) erfolgen, z.B. mit dem Apparat Mettler DSC 27 HP und einer Heizrate von 10°C/min.

Verbindung 2:
- Polymermatrix/Barrierkomponente = 90 Massen-%/10 Massen-%
- Schichtdicke der Verbindung 2 = 20 □m
- Abkühlrate: 0,1K/min
- Abkühlung von 180 °C auf T = T_{UCST} - 10 K
- durchschnittliche Agglomeratgröße der diskontinuierlichen Phase = 40 nm

| | **Sauerstoffpermeabilität** bei 25°C bei 50% relativer Feuchtigkeit [cm³ mm/(m² bar 24 h)] | **Wasserdampfpermeabilität** bei 25°C bei 50% relativer Feuchtigkeit [cm³ mm/(m² bar 24h)] |
|---|---|---|
| **Polyethylenterephtalat** | 7 | 3 |
| **Verbindung 2** | 0.1 | 0,3 |

Die Sauerstoffpermeabilität wurde mit einer modifizierten ASTM (American Society for Testing and Materials) -Standardmethode D3985-81 gemessen.
Die Wasserdampfpermeabilität wurde gravimetrisch mit der ASTM-Standardmethode E-96 bestimmt.

Das Beispiel 2 zeigt, dass das erfindungsgemäße Verfahren im Vergleich zu reinem Polyethylentheraphtalat für die Verbindung 2 zu einer reduzierten Sauerstoff und Wasserdampfpermeabilität führt.

### Beispiel 3:

Beispiel Ansatz 3: In einem Dreihalskolben, versehen mit Rührer, Innenthermometer, Tropftrichter und Gaseinleitrohr, werden 600,0 g 1-Isocyanato-3-isocyanatomethyl-3,5,5-trimethylcyclohexan (CAS 4098-71-9, IPDI) und 0,12 g Dibutylzinndilaurat (CAS 77-58-7, DBTL) unter Stickstoffabdeckung bei 23°C vorgelegt. Es werden 180 g 1,1,1-Trimethylolpropan (CAS 77-99-6, TMP) unter Rühren und Erwärmen auf 60°C in 800 g Essigsäurebutylester (CAS 123-86-4, BA) gelöst. Die 60°C warme Lösung von TMP in BA wird unter ständigem Rühren zur 23°C warmen Mischung aus IPDI/DBTL über einen Glastrichter zugegeben. Die Mischungstemperatur beträgt 50°C. Nach beendeter Zudosierung steigt die Temperatur der Reaktionsmischung auf 82°C und wird mit einem Wasserbad auf 55°C, eingestellt Bei Erreichen eines NCO-Gehaltes (bestimmt nach DIN EN ISO 11909) von 6,0 Gew.-% werden 133,33 g Dicyclohexylmethan-4,4'-diisocyanat (CAS 5124-30-1, H12MDI) zugesetzt, die Mischung auf 60 °C erwärmt und 1h bei dieser Temperatur gerührt. Danach hat die Lösung einen NCO-Gehalt von 5,8 Gew.-%.

Nach gleicher Versuchsbeschreibung werden die Ansätze 1 und 2 (siehe nachfolgende Tabelle 3) in unterschiedlichen Mengen (wie angegeben) durchgeführt.
Das Produkt aus Ansatz 3 besitzt eine Farbzahl nach Hazen (bestimmt nach DIN ISO 6271) von 13 und eine Viskosität (bestimmt nach DIN 53019) von 6460,2 [mPas].

| **Tabelle 3** | **Ansatz 1** | **Ansatz 2** | **Ansatz 3** |
|---|---|---|---|
| IPDI | 375,0 | 487,5 | 600,0 g |
| TMP | 112,5 | 146,3 | 1.80,0 g |
| BA | 400,0 | 520,0 | 800,0 g |
| DBTL | 0,075 | 0,1 | 0,12 g |
| H12MDI | 83,33 | 108,3 | 133,33 g |
| | | | |
| **Summe** | **970,9** | **1262,2** | **1713,4 g** |

Das Syntheseprodukt aus TMP, IPDI und anschließender Behandlung mit H12MDI, hergestellt gemäß Beispiel Ansatz 3, stellt eine Kombination hyperverzweigter Polysiocyanate mit einem Diisocyanat dar. Auf diese Weise konnte beispielsweise ein Addukt mit einem NCO-Gehalt von 5,8 Gew.-%. (beschrieben in Ansatz 3) eingestellt werden. Eine breite Variation ist durch diese Vorgehensweise möglich. Die Modifierkomponente H12MDI wird bei dem Vorgang der Aushärtung durch DABCO katalysiert und bewirkt somit eine inter-/(bevorzugt)intramolekulare Vernetzung des hyperverzweigten Polyisocyanates. Diese zusätzliche Vernetzung spiegelt sich überraschender Weise in den verbesserten mechanischen Eigenschaften der Lackfilme deutlich wider. Das hergestellte modifizierte Addukt wird nach dem erfindungsgemäßen Verfahren wie folgt eingesetzt:

### Referenz 1 (Stand der Technik):

- 25,62 g: Vestanat HT 2500LV (CAS 28182-81-2, 99,75 %)
- 87,36g: Macrynal SM 510n/60LG (Firma Cytec Surface Specialties)
- 43,0 g: BA/Xylol 1 : 1
- 0,7g: DBTL 1%ig in BA (1% bezogen auf das Harz)
- 0,31g: Tego Flow 300 (0,2% bezogen auf das Gesamtsystem) (Degussa AG, Tego Chemie Service GmbH)
- 6,12 g: Dibasicester DBE (4 % bezogen auf das Gesamtsystem) (Firma Sigma Aldrich Chemie GmbH)

### System 1:

- 36,47 g: Addukt aus Beispiel Ansatz 3
- 39,14 g: Macrynal SM 510n/60LG
- 36,0 g: BA/Xylol im Verhältnis 1 : 1
- 0,42 g: DBTL 1%ig in BA (1 % bezogen auf das Harz)
- 0,22g: Tego Flow 300 (0,2 % bezogen auf das Gesamtsystem)
- 4,49 g: DBE (4% bezogen auf das Gesamtsystem)
- 0,29 g: DABCO (1,4 Diazabicyclo[2.2.2.]octan, CAS 280-57-9) 5%ig in BA (0,26% bezogen auf das Gesamtsystem)

Beide Lacksysteme werden bei einer Temperatur von 140 °C und einer Dauer von 30 min. gehärtet Die Viskosität wird vorab auf 20 [mPas] eingestellt.

### Referenz 2

- 10,0g: HT 2500 LV
- 17,05 g: Macrynal SM 510n/60LG
- 29,2g: Oxyester T 1136, bifunktioneller hydroxylgruppenhaltiger Polyester, Degussa AG, Coatings and Colorants)
- 18,0 g: BA/Xylol im Verhältnis 1 :1
- 0,5 g: DBTL 1%ig in BA (1 % bezogen auf das Harz)
- 0,15 g: Tego Flow 300 (0,2% bezogen auf das Gesamtsystem)
- 2,97 g: DBE (4% bezogen auf das Gesamtsystem)

### System 2:

- 18,26 g: Addukt aus Beispiel Ansatz 3
- 4,90g: Macrynal SM 510n/60LG
- 5,34 g: Oxyester T1136
- 18,0 g: BA/Xylol1 : 1
- 0,18 g: DBTL 1%ig in BA (1 % bezogen auf das Harz)
- 0,10 g: Tego Flow 300 (0,2% bezogen auf das Gesamtsystem)
- 1,87 g: BE (4 % bezogen auf das Gesamtsystem)
- 0,05 g: DABCO 5%ig in BA (0,26% bezogen auf das Gesamtsystem)

Beide Lacksysteme werden bei einer Temperatur von 140°C und einer Dauer von 30 min. gehärtet. Es wurde festgestellt, dass der Referenz 2 nicht vollständig aushärtet und somit auf Grund der zu schlechten Lackeigenschaften keinerlei mechanischen Abprüfungen (Schichtdicke, Gitterschnitt, Eindruckhärte nach Buchholz, Pendelhärte, Tiefung, Kugelschlag und Kratzfestigkeit) zuließ. Die Viskosität wird vorab auf 20 [mPas] eingestellt

Lacktechnische Abprüfung (ausgewählte Tests):

| Tabelle 4 | Referenz 1 | System 1 |
|---|---|---|
| Schichtdicke [µm], DIN 2178 | 21- 22 | 22 - 26 |
| Gitterschnitt DIN 2409 | 0B | 0B |
| Eindruckhärte(Buchholz) DIN 2815 | 111 | 125 |
| Pendelhärte [s] DIN 1522 | 194 | 204 |
| Kratzfestigkeit [N] bei einer Schichtdicke von 80 [µm] | 5 | 8-9 |

| Tabelle 5 | System 2 |
|---|---|
| Schichtdicke [µm], DIN 2178 | 21-27 |
| Gitterschnitt DIN 2409 | 0B |
| Tiefung [mm] DIN 1520 | 10,5 |
| Kugelschlag [in lb] ASTM D 2794-93 | >160 |
| Kratzfestigkeit [N] bei einer Schichtdicke von 80 [µm] | 6-7 |

Die Tabelle 4 zeigt, dass das erfindungsgemäße System 1 sich gegenüber dem Stand der Technik (Referenz 1) durch deutliche verbesserte mechanische Eigenschaften, insbesondere Härte und Kratzfestigkeit auszeichnet. Dies geht aus der nach Buchholz gemessenen Eindruckhärte (DIN 2851), aus der nach DIN 1522 gemessenen Pendelhärte und aus der Prüfung mit dem Härteprüfstab (Typ 318) der Firma Erichsen hervor. Der Kratztest mit dem Härteprüfstab (Typ 318) der Firma Erichsen wurde mit der Gravierspritze Nummer 4 (nach Opel - 0,5 mm Durchmesser, spezielle Spitzengeometrie und Länge) unter Verwendung der 0 bis 10 [N] Feder der Firma Erichsen durchgeführt

Zudem wird aus der Tabelle 5 deutlich, dass gegenüber der Referenz 2 die mechanischen Eigenschaften in Form von Haftung, Elastizität und Kratzfestigkeit, gemessen an der Tiefung nach DIN 1520, Kugelschlag nach ASTM D 2794-93 und der Prüfung mit dem Härteprüfstab (Typ 318) der Firma Erichsen, überraschenderweise durchgeführt und deutlich verbessert werden konnten.

## Patentansprüche

1. Verfahren zur Herstellung von Polymermischungen, **dadurch gekennzeichnet, dass** nanoskalige Agglomerate aus dendritischen Polymeren mit einer Molmasse zwischen 400 und 100 000 g(mol durch Temperaturabsenkung unter die obere kritische Lösungstemperatur oder Temperaturerhöhung über die untere kritische Lösungstemperatur des Systems in einer Polymermatrix erzeugt werden und das System durch Polymerisation, Temperaturänderung, UV-Härtung, Druckabsenkung, Tempern und/oder Verdampfung flüchtiger Systemkomponenten in den festen Aggregatzustand überführt wird.

2. Verfahren nach Anspruch 1, **dadurch gekennzeichnet, dass** die nanoskaligen Polymeragglomerate aus einem oder mehreren dendritischen Polymeren mit einer Glastemperatur über 10°C bestehen und eine Konzentration in der Polymermischung von maximal 50 Massen-%, bevorzugt von maximal 40 Massen-% und besonders bevorzugt von maximal 30 Massen-% haben.

3. Verfahren nach einem der Ansprüche 1 oder 2, **dadurch gekennzeichnet, dass** die nanoskaligen Polymeragglomerate mindestens eine, vorzugsweise alle, der folgenden Eigenschaften aufweisen
(α1) ein Verhältnis M_{w}/M_{N}) - bestimmt durch Kombination von Analysemethoden, insbesondere durch Kombination von Dampfdruck- und Membranosmometrie, gegebenenfalls aber auch durch Gelpermeationschromatographie (GPC bzw. SEC) oder Matrix Assisted Laser Desorption Ionization Time of Flight (MALDI-TOF) - Massenspektroskopie - in einem Bereich von 1 bis 20, besonders bevorzugt in einem Bereich von 1,05 bis 10 und darüber hinaus bevorzugt in einem Bereich von 1,1 bis 5 aufweisen, wobei M_{W} das Massenmittel der Molamasse und M_{N} das Zahlenmittel der Molmasse ist;
(α2) ein Massenmittel der Molmasse M_{w} in einem Bereich von 100 bis 500 000 g/mol, besonders bevorzugt in einem Bereich von 400 bis 100 000 g/mol und darüber hinaus bevorzugt in einem Bereich von 1 000 bis 50 000 g/mol;
(α3) eine Glastemperatur T_{g}, bestimmt mittels Differential Scanning Calometrie (DSC), die größer als -30°C, besonders bevorzugt größer als 0 °C und darüber hinaus bevorzugt größer als 10°C ist;
(α4) das hyperverzweigte Polymer oder deren Mischung ist bis zu einer Temperatur von 100°C, besonders bevorzugt bis zu einer Temperatur von 150°C, darüber hinaus bevorzugt bis zu einer Temperatur von bis zu 200°C und weiterhin bevorzugt bis zu einer Temperatur von 300°C stabil, wobei unter dem Begriff stabil verstanden wird, dass bis zu der jeweiligen Temperatur keine Zersetzung des Polymers beispielsweise durch Bildung gasformiger Spaltprodukte, insbesondere Kohlendioxid oder Wasser, bis zu einer Grenze von unter 10 ppm, vorzugsweise von unter 1 ppm und besonders bevorzugt 0,1 ppm gaschromatographisch nachweisbar ist.

4. Verfahren nach mindestens einem der Ansprüche 1 bis 3, **dadurch gekennzeichnet, dass** das dendritische Polymer ein hyperveizweigter aliphatischer Polyester, hypervercweigter aromatisch-aliphatischer Polyester, hyperverzweigtes Polyamid, hyperverzweigtes Polycarbonat, hyperverzweigtes Polyetheresteramid, hyperverzweigter Polyetherester, hyperverzweigtes Polyesteramid, hyperverzweigter Polyether, hyperverzweigtes Polyethersiloxan, hyperverzweigtes Polyethylenimin, hyperverzweigtes Polyurethan, hyperverzweigter Polyharnstoff, hyperverzweigtes Polyisocyanat oder ein hyperverzweigtes Polyamidoamin ist und bei 150°C zu mindestens 3 Massenprozent homogen in der Polymermatrix gelöst werden kann.

5. Verfahren nach mindestens einem der Ansprüche 1 bis 4, **dadurch gekennzeichnet, dass** die Polymermatrix aus mindestens einem Polymer besteht, ausgesucht aus der Gruppe Polyethylenterephthalat, Polypropylen, Polyethylen, Polystyrol, Polyvinylchlorid, Polyamid, Polyisocyanate, Polyurethane, Polyharnstoffe, Polyvinylalkohol, Polyvinylacetat, Nitrocellulose, Polyvinylharz, aliphatische, aromatische und/oder cycloaliphatische, gesättigte und/oder ungesättigte Polyester und/oder funktionalisierte Polyester, Epoxidharze, Keton-Aldehydharze, Polyacrylsäureester, chlorierten Naturkautschuk, Vinylacetat, Maleinsäureanhydrid, Acrylsäure.

6. Verfahren nach mindestens einem der Ansprüche 1 bis 5, **dadurch gekennzeichnet, dass** die obere kritische Lösungstemperatur der Polymermischung < 250°C oder die untere kritische Lösungstemperatur > 0°C ist.

7. Verfahren nach mindestens einem der Ansprüche 1 bis 6, **dadurch gekennzeichnet, dass** nanoskalige Polymeragglomerate in einem Konzentrationsbereich von 1 bis 50 Massen-% an dendritischen Polymeren in der Polymermischung durch eine Temperaturabsenkung von maximal 50 K unter die obere Lösungstemperatur oder eine Temperaturerhöhung von maximal 50 K über die untere Lösungstemperatur des Systems in einer Polymermatrix erzeugt werden.

8. Verfahren nach mindestens einem der Ansprüche 1 bis 7, **dadurch gekennzeichnet, dass** in die Polymermatrix vor dem Überführen in den festen Aggregatzustand Additive eingemischt werden, die ausgesucht sind aus der Gruppe der
- modifizierten Acrylate wie Acrylatgruppen enthaltende Organopolysiloxane, Epoxyacrylate, Urethanacrylate oder Polyetheracrylate,
- anorganische Pigmente aus Titanoxid, Eisenoxid, Chromoxid, Chromat oder organischen Pigmente wie Ruß, Anthrachinon-, Azo-, Flavanthron-, Phtnalocyanin-Pigmente,
- Photoinitiatoren und/oder Photosensibilisatoren,
- Silikonöle oder
- organisch modifizierte Siloxane.

9. Verfahren nach mindestens einem der Ansprüche 1 bis 8, **dadurch gekennzeichnet, dass** die Veteilungshomogenität und Agglomeratgröße der dispersen Phase in der Polymermischung durch Temperaturänderungen eingestellt werden und das Gesamtsystem für mindestens eine Temperatur zwischen 20 und 200°C eine Dispersion aus zwei flüssigen Phasen oder einer festen und mindestens einer flüssigen Phasen darstellt.

10. Verfahren nach mindestens einem der Ansprüche 1 bis 8, **dadurch gekennzeichnet, dass** feste Nanopartikel mit einem oder mehreren dendritischen Polymeren durch Fällung, Sprühtrocknung, Sprühgranulation, Prozessen mit komprimierten Gasen wie GAS, RESS, PGSS und PCA überzogen werden, durch Rühren im Temperaturbereich zwischen 10°C und 200°C, bevorzugt zwischen 20°C und 180°C und besonders bevorzugt zwischen 20°C und 150°C in der Polymermatrix dispergiert werden, und dendritische Polymere mit einer Gesamtkonzentration von maximal 20 Massenprozent in der Polymermischung enthalten sind.

11. Polymermischungen, **dadurch** erhalten, dass nanoskalige Agglomerate aus dendritischen Polymeren mit einer Molmasse zwischen 400 und 100 000 g/mol durch Temperaturabsenkung unter die obere kritische Lösungstemperatur des Systems in einer Polymermatrix erzeugt werden und das System durch Polymerisation, Temperatkuränderung, UV-Härtung, Druckabsenkung, Tempern oder Verdampfung flüchtiger Systemkomponenten in den festen Aggregatkzustand überführt wird.

12. Polymermischungen nach Anspruch 11, hergestellt nach einem Verfahren nach mindestens einem der Ansprüche 2 bis 10.

13. Verwendung der Polymermischungen nach mindestens einem der Ansprüche 1 bis 12 für Beschichtungen, Verpackungen und Behälter.

14. Beschichtungen mit einer verbesserten Sperrwirkung gegen Gas- und Flüssigkeitspermeation, verbesserten mechanischen Eigenschaften, einer verbesserten Kratzfestigkeit, Abriebbeständigkeit, Chemikalienbeständigkeit oder verbesserten easy to-clean Eigenschaften, wobei die Beschichtungen Polymermischungen nach mindestens einem der Ansprüche 1 bis 12 enthalten.

15. Beschichtungen nach Anspruch 14,
**dadurch gekennzeichnet,**
**dass** diese durch Rakel- und Tauchverfahren, Spraycoating, Spincoating, Walz- oder Gießverfahren hergestellt wurden.

## Claims

1. Process for producing polymer mixtures, **characterized in that** nanoscale agglomerates of dendritic polymers having a molar mass of between 400 and 100 000 g/mol are formed by lowering the temperature to below the upper critical solution temperature or raising the temperature to above the lower critical solution temperature of the system in a polymer matrix, and the system is converted into the solid aggregate state by polymerization, temperature change, UV curing, pressure lowering, heat treatment and/or evaporation of volatile components of the system.

2. Process according to Claim 1, **characterized in that** the nanoscale polymer agglomerates are composed of one or more dendritic polymers having a glass transition temperature above 10°C and have a concentration in the polymer mixture of not more than 50% by mass, preferably not more than 40% by mass, and more preferably not more than 30% by mass.

3. Process according to one of Claims 1 and 2, **characterized in that** the nanoscale polymer agglomerates have at least one and preferably all of the following properties:
(α1) a ratio M_{w}/Mₙ, as determined by combination of analysis methods, in particular by combination of vapor-pressure osmometry and membrane osmometry, alternatively, if desired, by gel permeation chromatography (GPC or SEC) or matrix assisted laser desorption ionization time of flight (MALDI-TOF) mass spectroscopy, in a range from 1 to 20, more preferably in a range from 1.05 to 10, and more preferably still in a range from 1.1 to 5, M_{w} being the mass average of the molar mass and Mₙ the number average of the molar mass;
(α2) a mass-average molar mass M_{w} in a range from 100 to 500 000 g/mol, more preferably in a range from 400 to 100 000 g/mol, and more preferably still in a range from 1000 to 50 000 g/mol;
(α3) a glass transition temperature Tg, as determined by means of differential scanning calorimetry (DSC), of greater than -30°C, more preferably greater than 0°C, and more preferably still greater than 10°C;
(α4) the hyperbranched polymer or mixture thereof is stable up to a temperature of 100°C, more preferably up to a temperature of 150°C, more preferably still up to a temperature of up to 200°C, and with further preference up to a temperature of 300°C, stability here being understood to mean that up to the respective temperature no decomposition of the polymer, through formation of gaseous elimination products, especially carbon dioxide or water, for example, is detectable by gas chromatography down to a limit of below 10 ppm, preferably below 1 ppm, and more preferably 0.1 ppm.

4. Process according to at least one of Claims 1 to 3, **characterized in that** the dendritic polymer is a hyperbranched aliphatic polyester, hyperbranched aromatic-aliphatic polyester, hyperbranched polyamide, hyperbranched polycarbonate, hyperbranched polyetheresteramide, hyperbranched polyetherester, hyperbranched polyesteramide, hyperbranched polyether, hyperbranched polyethersiloxane, hyperbranched polyethyleneimine, hyperbranched polyurethane, hyperbranched polyurea, hyperbranched polyisocyanate or hyperbranched polyamidoamine and can be dissolved homogeneously in the polymer matrix at 150°C to an extent of at least 3 percent by mass.

5. Process according to at least one of Claims 1 to 4, **characterized in that** the polymer matrix is composed of at least one polymer selected from the group of polyethylene terephthalate, polypropylene, polyethylene, polystyrene, polyvinyl chloride, polyamide, polyisocyanates, polyurethanes, polyureas, polyvinyl alcohol, polyvinyl acetate, nitrocellulose, polyvinyl resin, aliphatic, aromatic and/or cycloaliphatic, saturated and/or unsaturated polyesters and/or functionalized polyesters, epoxy resins, ketone-aldehyde resins, polyacrylic esters, chlorinated natural rubber, vinyl acetate, maleic anhydride, and acrylic acid.

6. Process according to at least one of Claims 1 to 5, **characterized in that** the upper critical solution temperature of the polymer mixture is < 250°C or the lower critical solution temperature is > 0°C.

7. Process according to at least one of Claims 1 to 6, **characterized in that** nanoscale polymer agglomerates are formed, in a concentration range of 1% to 50% by mass of dendritic polymers in the polymer mixture, by a temperature lowering of not more than 50 K below the upper solution temperature or a temperature raising of not more than 50 K above the lower solution temperature of the system in a polymer matrix.

8. Process according to at least one of Claims 1 to 7, **characterized in that**, prior to conversion into the solid aggregate state, additives are mixed into the polymer matrix, said additives being selected from the group of
- modified acrylates such as acrylate-functional organopolysiloxanes, epoxy acrylates, urethane acrylates or polyether acrylates,
- inorganic pigments of titanium oxide, iron oxide, chromium oxide, chromate or organic pigments such as carbon black, anthraquinone pigments, azo pigments, flavanthrone pigments, and phthalocyanine pigments,
- photoinitiators and/or photosensitizers,
- silicone oils or
- organically modified siloxanes.

9. Process according to at least one of Claims 1 to 8, **characterized in that** the homogeneity of distribution and agglomerate size of the disperse phase in the polymer mixture are set by temperature changes and the overall system constitutes, for at least one temperature between 20 and 200°C, a dispersion of two liquid phases or one solid phase and at least one liquid phase.

10. Process according to at least one of Claims 1 to 8, **characterized in that** solid nanoparticles are coated with one or more dendritic polymers by precipitation, spray drying, spray granulation, operations with compressed gases such as GAS, RESS, PGSS and PCA, are dispersed in the polymer matrix by stirring in the temperature range between 10°C and 200°C, preferably between 20°C and 180°C, and more preferably between 20°C and 150°C, and dendritic polymers are contained in the polymer mixture with a total concentration of not more than 20 percent by mass.

11. Polymer mixtures obtained by forming nanoscale agglomerates from dendritic polymers having a molar mass of between 400 and 100 000 g/mol by lowering the temperature to below the upper critical solution temperature of the system in a polymer matrix, and converting the system into the solid aggregate state by polymerization, temperature change, UV curing, pressure lowering, heat treatment or evaporation of volatile components of the system.

12. Polymer mixtures according to Claim 11, produced by a process according to at least one of Claims 2 to 10.

13. Use of the polymer mixtures according to at least one of Claims 1 to 12 for coatings, packaging or containers.

14. Coatings having an improved barrier action with respect to gas permeation and liquid permeation, improved mechanical properties, improved scratch resistance, abrasion resistance, chemical resistance or improved easy-to-clean properties, the coatings containing polymer mixtures according to at least one of Claims 1 to 12.

15. Coatings according to Claim 14, **characterized in that** they have been produced by knife-coating and dipping methods, spray coating, spin coating, rolling methods or casting methods.

## Revendications

1. Procédé en vue de la fabrication de mélanges de polymères, **caractérisé en ce que** l'on produit des agglomérats nanométriques faits de polymères dendritiques ayant une masse molaire comprise entre 400 et 100 000 g/mole par abaissement de température en dessous de la température de solution critique supérieure ou par augmentation de température au-dessus de la température de solution critique inférieure du système et **en ce que** le système est converti dans l'état d'agrégation solide par polymerization, modification de température, durcissement aux rayons UV, abaissement de la pression, trempe et/ou évaporation des composants volatils du système.

2. Procédé selon la revendication 1, **caractérisé en ce que** les agglomérats polymères nanométriques se composent d'un ou de plusieurs polymères dendritiques-ayant une température de transition vitreuse au-dessus de 10 °C et possèdent une concentration dans le mélange de polymères d'au maximum 50 % en masse, de préférence, au maximum de 40 % en masse et, en particulier, de préférence, d' au maximum de 30 % en masse.

3. Procédé selon l'une quelconque des revendications 1 or 2, **caractérisé en ce que** les agglomérats de polymères nanométriques présentent au moins un, de préférence, toutes les propriétés suivantes:
(α1) un rapport M_{w}/Mₙ, déterminé par une combinaison de méthodes d'analyse, en particulier par une combinaison d'osmométrie à pression de vapeur et à membrane, le cas échéant, cependant aussi par chromatographie à perméation de gel (GPC ou SEC) ou par spectroscopie de masse Matrix Assisted Laser Desorption Ionization Time of Flight (MALDI-TOF) - dans un domaine de 1 à 20, en particulier, de préférence, dans un domaine de 1,05 à 10 et en outre, de préférence, dans un domaine de 1,1 à 5, M_{w} étant la masse molaire moyenne à la masse de la masse molaire et M_{N} étant la masse molaire moyenne au nombre de la masse molaire;
(α2) une masse molaire moyenne à la masse de la masse molaire M_{w} dans un domaine de 100 à 500 000 g/mole, en particulier, de préférence, dans un domaine de 400 à 100 000 g/mole et en outre, de préférence, dans un domaine de 1 000 à 50000 g/mole;
(α3) une température de transition vitreuse Tg, déterminée par calorimétrie différentielle à balayage (CDB), qui est supérieure à -30°C, en particulier, de préférence, supérieure à 0°C et outre, de préférence, supérieure à 10°C;
(α4) le polymère hyper ramifié ou leur mélange est stable jusqu'à une température de 100°C, en particulier, de préférence, jusqu'à une température de 150°C, en outre, de préférence, jusqu'à une température allant jusqu'à 200 °C et de plus, de préférence, jusqu'à une température de 300°C, étant donné que sous le terme de stable, on entend le fait que jusqu'à la température correspondante aucune décomposition du polymère, par exemple, par formation de produits de clivage gazeux, en particulier de dioxyde de carbone ou d'eau, jusqu'à une limite d'en dessous de 10 ppm, de préférence, d'en dessous de 1 ppm, et tout particulièrement de 0,1 ppm n'est détectable par voie d'une chromatographie en phase gazeuse.

4. Procédé au moins selon l'une quelconque des revendications 1 à 3, **caractérisé en ce que** le polymère dendritique est un polyester aliphatique hyper ramifié, un polyester aromatique-aliphatique hyper ramifié, un polyamide hyper ramifié, un polycarbonate hyper ramifié, un polyétheresteramide hyper ramifié, un polyétherester hyper ramifié, un polyesteramide hyper ramifié, un polyéther hyper ramifié, un polyéthersiloxane hyper ramifié, un polyéthylèneimine hyper ramifié, un polyuréthanne hyper ramifié, un polyurée hyper ramifié, un polyisocyanate hyper ramifié ou une polyamidoamine hyper ramifiée et **en ce qu'**à la température de 150°C jusqu'à au moins 3 pour cent en masse puissent être dissous d'une manière homogène dans la matrice de polymère.

5. Procédé selon l'une quelconque des revendications 1 à 4, **caractérisé en ce que** la matrice polymère se compose au moins d'un polymère sélectionné parmi le groupe téréphtalaté de polyéthylène, polypropylène, polyéthylène, polystyrène, chlorure de polyvinyle, polyamide, polyisocyanate, polyuréthane, polyurée, alcool polyvinylique, acétate de polyvinyle, nitrocellulose, résine de polyvinyle, polyesters aliphatiques, aromatiques et/ou cycloaliphatiques saturés et/ou insaturés et/ou polyesters fonctionnalisés, résines époxydes, résines aldéhyde-cétone, esters d'acide polyacrylique, caoutchouc naturel chloré, acétate de vinyle, anhydride maléique, acide acrylique.

6. Procédé selon l'une quelconque des revendications 1 à 5, **caractérisé en ce que** la température de solution critique supérieure du mélange de polymères est < 250 °C ou que la température de solution critique inférieure est > 0 °C.

7. Procédé selon l'une quelconque des revendications 1 à 6, **caractérisé en ce que** l'on produit dans une matrice polymère des agglomérats de polymères nanométriques dans un domaine de concentration de 1 à 50 % en masse en polymères dendritiques dans le mélange de polymères par un abaissement d'au maximum 50 K sous la température de solution supérieure ou par une augmentation d'au maximum 50 K au-dessus de la température de solution inférieure du système.

8. Procédé selon l'une quelconque des revendications 1 à 7, **caractérisé en ce que** dans la matrice polymère, avant la conversion dans l'état d'agrégation solide, on introduit par mélange des additifs qui sont sélectionnés parmi le groupe
- des acrylates modifiés comme des organopolysiloxanes contenant des groupements acrylates, des acrylates époxydes, des acrylates d'uréthanne ou des acrylates de polyéthers,
- des pigments organiques faits d'oxyde de titane, d'oxyde de fer, d'oxyde de chrome, de chromate ou de pigments organiques comme le noir de fumée, les pigments d'anthraquinone, les pigments azoïques les pigments de flavanthrone, les pigments de phtalocyanine,
- d'agents photo amorceurs et/ou d'agents photo sensibilisateurs,
- d'huiles de silicones ou
- de siloxanes modifiés par voie organique.

9. Procédé selon l'une quelconque des revendications 1 à 8, **caractérisé en ce que** l'homogénéité de répartition et la grandeur des agglomérats dans la phase disperse dans le mélange de polymères sont ajustés par des modifications de température et **en ce que** le système tout entier représente, pour au moins une température, comprise entre 20 et 200 °C, une dispersion faite de deux phases fluides ou d'une phase solide et d'au moins une phase fluide.

10. Procédé selon l'une quelconque des revendications 1 à 8, **caractérisé en ce que** les nanoparticules solides sont revêtues à l'aide d'un ou de plusieurs polymères dendritiques par précipitation, séchage par pulvérisation, granulation à pulvérisation, à l'aide de processus à gaz comprimés comme les processus GAS, RESS, PGSS et PCA, sont mis en dispersion dans la matrice polymère par agitation dans le domaine de températures compris entre 10 °C et 200 °C, en particulier, de préférence, 20 °C et 180 °C et tout particulièrement, de préférence, entre 20 °C et 150 °C et **en ce que** des polymères dendritiques sont contenus dans le mélange de polymères à une concentration globale d'au maximum 20 pour cent en masse.

11. Mélanges de polymères obtenus en ce que l'on produit des agglomérats nanométriques faits de polymères dendritiques ayant une masse molaire comprise entre 400 et 100 000 g/mole par abaissement de la température sous la température de solution critique supérieure du système dans une matrice polymère et en ce que le système est converti dans l'état d'agrégation solide par polymérisation, modification de la température, durcissement aux rayons UV, abaissement de la pression, trempe ou évaporation des composants de système volatils.

12. Mélanges de polymères selon la revendication 11, fabriqués conformément à un procédé selon l'une quelconque des revendications 2 à.10.

13. Utilisation des mélanges de polymères selon l'une quelconque des revendications 1 à 12 pour des revêtements, des emballages et des récipients.

14. Revêtements ayant un effet barrière amélioré vis-à-vis de la perméation des gaz et des fluides, des propriétés mécaniques améliorées, une résistance aux rayures améliorée, une résistance à l'usure améliorée, une résistance aux produits chimiques améliorée ou des propriétés easy-to-clean améliorées, les revêtements contenant des mélanges de polymères selon l'une quelconque des revendications 1 à 12.

15. Revêtements selon la revendication 14,
**caractérisés en ce que** ceux-ci ont été fabriqués par des procédés de revêtement à la racle et par immersion, par un revêtement à pulvérisation, par un revêtement par centrifugation, par des procédés à l'aide de rouleaux ou à coulée.
